# EUROPEAN PATENT SPECIFICATION

(11) **EP 1 922 961 B1**
(45) Date of publication and mention of the grant of the patent: **02.12.2009**
(21) Application number: 05783985.4
(22) Date of filing: 10.09.2005
(51) Int. Cl.: A47J 27/21, F24H 1/20

(54) **A CONTROL METHOD FOR PREVENTING ELECTRICAL WATER BOILER FROM EMPTY BOILING**
STEUERVERFAHREN ZUR VERHINDERUNG DES LEERKOCHENS EINES ELEKTRISCHEN WASSERKOCHERS
PROCEDE DE COMMANDE POUR EMPECHER UNE BOUILLOIRE DE BOUILLIR A VIDE

(43) Date of publication of application: 21.05.2008
(73) Proprietor: Crastal Technology (Shenzhen) Co., Ltd., Shenzhen, Guang Dong 518055 (CN)
(72) Inventor: ZHANG, George, Guang Dong 518055 (CN); WANG, Yaolun, Guang Dong 518055 (CN)
(74) Representative: Desaix, Anne
(86) International application number: PCT/CN2005/001454
(87) International publication number: WO 2007/028281

(56) References cited:
- EP-A1- 0 380 369
- GB-A- 2 185 161
- GB-A- 2 404 293
- JP-A- 02 034 121
- JP-A- 08 280 540
- JP-A- 11 078 210
- US-A- 5 437 002
- US-A- 5 442 157

## Description

### FIELD OF THE INVENTION

The present application relates to a method for controlling an electric kettle and, more particularly, to a control method for preventing an electric kettle from dry boiling.

### BACKGROUND OF THE INVENTION

Electric kettles are convenient for human in living and working. In the prior art a fuse protector is typically used to prevent the electric kettle from dry boiling. When a user inadvertently turns on a heating power supply with no water in the electric kettle, the rising temperature of the heater would bum through the fuse, thereby turning the power supply off in order to protect the electric kettle. However, a disadvantage of this method is that the control circuit in the electric kettle may not turn off the heating power supply in time due to the inaccuracy in detecting the temperature rise. As a result, electronic elements in the electric kettle may suffer damage. Another conventional method is to use a bimetal dry boiling prevention switch. In the event that dry boiling occurs, the rising temperature can trigger the dry boiling prevention switch to turn the heater's power off. However, this method also suffers a drawback of failing to turn the power off in time. Patent document US-A-5 437 002 in the prior art may be useful for understanding the present invention. The present invention has improvements and advantages over this reference, which will be better understood from the following description.

### SUMMARY OF THE INVENTION

The purpose of this invention is to provide a control method for preventing an electric kettle from dry boiling, and the technical problem to be solved by the invention is to accurately determine the temperature rise in the electric kettle, and turn off the heating power supply correspondingly. The present invention concerns the subject-matter as claimed in claim 1.

According to the present invention, there is provided a method for preventing an electric kettle from dry boiling comprising the following steps: (1) setting a temperature sensor, a microprocessor and a control circuit in the electric kettle; (2) detecting a real-time temperature inside the electric kettle by the sensor; (3) calculating a temperature change rate in accordance with the detected temperature and comparing the temperature change rate with a preset value by the microprocessor; and (4) sending a signal to the control circuit if the temperature change rate is greater than the preset value.

According to the present invention, the microprocessor calculates an acceleration of change of the temperature when the temperature change rate is less than the preset value, and sends a signal to the control circuit when the acceleration of change of the temperature is greater than a preset acceleration value..

According to the present invention, the microprocessor retrieves the temperature change rate of a period prior to the current period and then compares it with the preset value again when the acceleration of change of the temperature is less than the preset acceleration value.

According to the present invention, a maximum heating period is preset in the microprocessor, and the microprocessor sends a signal to the control circuit if a continuous heating period exceeds the maximum heating period.

According to the present invention, a maximum heating temperature is preset in the microprocessor, and the microprocessor sends a signal to the control circuit if a current temperature exceeds the maximum heating temperature.

According to the present invention, the control circuit turns off the power supply upon receipt of the signal sent by the microprocessor.

According to the present invention, the microprocessor stores the temperature change rate and the acceleration of change of the temperature for each of continuous heating periods.

According to the present invention, the sensor begins to detect the temperature inside the electric kettle in real time when the control circuit turns on the heating power supply, and then the microprocessor calculates the temperature change rate and the acceleration of change of the temperature, and compares them with their respective preset values.

According to the present invention, the step of activating a continuous alarm is performed when the control circuit turns off the heating power supply.

According to the present invention, the microprocessor clears the stored temperature change rate and acceleration of change of the temperature when the control circuit turns off the heating power supply.

Compare with the prior art, the present invention adopts a microprocessor to calculate the temperature change rate and the acceleration of change of the temperature, and compare those rates with their preset value. When the temperature change rate and the acceleration of change of the temperature exceed the preset values, a signal is sent to the control circuit to turn off the heating power supply. The present invention provides an accurate method of estimating the temperature rise inside the electric kettle and provides a timely control of power-breaking to avoid any possible damage.

### BRIEF DESCRIPTION OF THE DRAWING

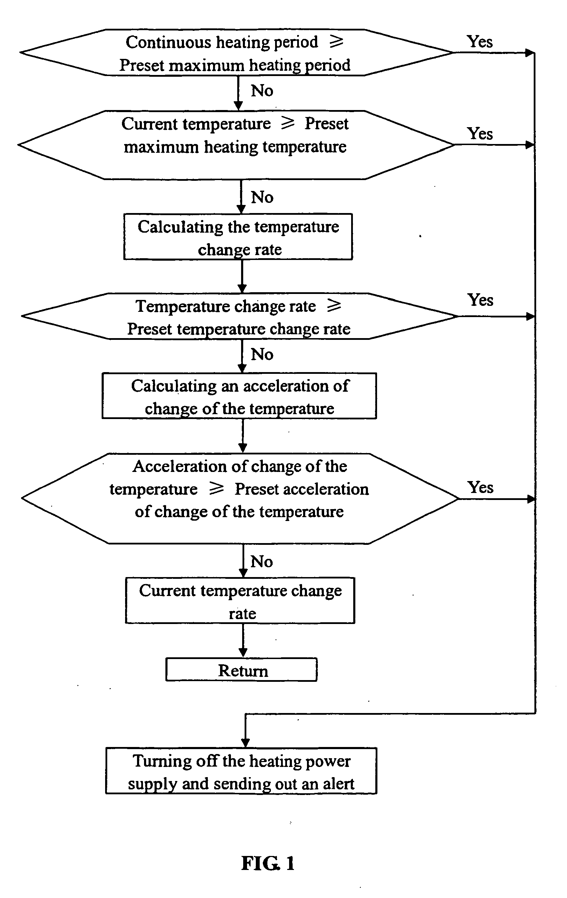

Figure 1 illustrates a flow chart of a control method for preventing an electric kettle from dry boiling according to the present invention.

### DESCRIPTION OF THE PREFERRED EMBODIMENTS

The present invention will be described in detail below with reference to the accompanying drawing and embodiments. A control method for preventing an electric kettle from dry boiling according to the present invention includes the following steps. Firstly, a temperature sensor, a microprocessor and a control circuit are set in the electric kettle. Secondly, the control circuit turns on a heating power supply which in turn triggers the sensor to detect a temperature inside the electric kettle in real time. Thirdly, the microprocessor calculates a temperature change rate in accordance with the detected temperature, and compares the temperature change rate with a preset value. Fourthly, if the temperature change rate is greater than the preset value, a signal is sent to the control circuit to cut off the heating power supply and an alarm is activated. However, if the temperature change rate is less than the preset value, the microprocessor calculates an acceleration of change of the temperature, i.e., the rate of the temperature change varied with time. Fifthly, if the acceleration of change of the temperature is grater than a preset acceleration value, the microprocessor sends a signal to the control circuit to turn off the heating power supply and activate an alarm. If the acceleration of change of the temperature is less than the preset acceleration value, the microprocessor retrieves the temperature change rate of the previous second, and returns to a main program to perform other programs and prepare for the dry boiling prevention for a next period.

Meanwhile, the microprocessor is preset with a maximum heating period. When the continuous heating period is greater than the maximum heating period, the microprocessor sends a signal to the control circuit to turn off the heating power supply and activate an alarm. The microprocessor is also preset with a maximum heating temperature. When the current temperature is greater than the maximum heating temperature, the microprocessor sends a signal to the control circuit to turn off the heating power supply and activate an alarm.

The microprocessor stores the temperature change rate and the acceleration of change of the temperature of each continuous heating period.

As shown in Figure 1, the heating power supply is on until the continuous heating period is greater than or equal to the preset maximum heating period, and at that time, the control circuit turns off the heating power supply and activates an alarm. If the continuous heating period is less than the preset maximum heating period, the sensor detects the current temperature. The heating power supply is turned off and an alarm is activated when the current temperature is greater than the preset maximum heating temperature. If the current temperature is less than the preset maximum heating temperature, the microprocessor calculates the temperature change rate and compares it with the preset value. If the temperature change rate is greater than the preset value, the heating power supply is turned off and an alarm is activated. If the temperature change rate is less than the preset value, the microprocessor calculates the acceleration of change of the temperature, i.e., the rate of the temperature change varied with time. If the acceleration of change of the temperature is greater than the preset acceleration value, the heating power supply is turned off and an alarm is activated. On the contrary, if the acceleration of change of the temperature is less than the preset acceleration value, the microprocessor retrieves the current temperature change rate and compares it again with the preset value to calculate the acceleration of change of the temperature in the next period. The preset values, such as the maximum heating period, the maximum heating temperature, the temperature change rate and the acceleration of change of the temperature, for electric kettles of various volumes and heating powers can be obtained by means of experiments and can be stored in the microprocessor in the form of constants.

An A/D converting interface of the microprocessor is connected with resistance networks of various voltage-dividing values which correspond to electric kettles with various volumes and heating powers. Different voltage dividing valuers result in various A/D converting results which are utilized as query codes to obtain a desired calculation period, a preset temperature change rate, a preset acceleration of change of the temperature, and a preset maximum heating period. Therefore, chips with the same software can be applied to electric kettles with different models and powers.

Example 1 - volume: 175L; heating power: 2,000W; calculation period: 6 seconds; preset temperature change rate: 8°C/s; and preset acceleration of change of the temperature: 2°C/s.

Example 2 - volume: 175L; heating power: 3,000W; calculation period: 2 seconds; preset temperature change rate: 8; and preset acceleration of change of the temperature: 2.

Example 3 - volume: 175L; heating power: 1,000W; calculation period: 10 seconds; preset temperature change rate: 8; and preset acceleration of change of the temperature: 2.

## Claims

1. A control method for preventing an electric kettle from dry boiling, comprising the following steps:
setting a temperature sensor, a microprocessor and a control circuit in the electric kettle;
detecting a real-time temperature inside the electric kettle by the sensor;
calculating a temperature change rate in accordance with the detected temperature and comparing the temperature change rate with a preset value by the microprocessor; and
sending a signal to the control circuit if the temperature change rate is grater than the preset value,
**characterized in that** the microprocessor calculates an acceleration of change of the temperature when the temperature change rate is less than the preset value, and sends a signal to the control circuit when the acceleration of change of the temperature is greater than a preset acceleration value.

2. A method according to claim 1, **characterized in that** the microprocessor retrieves the temperature change rate of a period prior to the current period and then compares it with the preset value again when the acceleration of change of the temperature is less than the preset acceleration value.

3. A method according to claim 2, **characterized in that** a maximum heating period is preset in the microprocessor, and the microprocessor sends a signal to the control circuit if a continuous heating period exceeds the maximum heating period.

4. A method according to claim 3, **characterized in that** a maximum heating temperature is preset in the microprocessor, and the microprocessor sends a signal to the control circuit if a current temperature exceeds the maximum heating temperature.

5. A method according to any one of claim 1-4, **characterized in that** the control circuit turns off the power supply upon receipt of the signal sent by the microprocessor.

6. A method according to claim 5, **characterized in that** the microprocessor stores the temperature change rate and the acceleration of change of the temperature for each of continuous

7. A method according to claim 6, **characterized in that** the sensor begins to detect the temperature inside the electric kettle in real time when the control circuit turns on the heating power supply, and then the microprocessor calculates the temperature change rate and the acceleration of change of the temperature, and compares them with their respective preset values.

8. A method according to claim 7, **characterized in that** the step of activating a continuous alarm is performed when the control circuit turns off the heating power supply.

9. A method according to claim 8, **characterized in that** the microprocessor clears the stored temperature change rate and acceleration of change of the temperature when the control circuit turns off the heating power supply.

## Patentansprüche

1. Steuerverfahren zum Verhindern von Trockensieden eines elektrischen Wasserkochers, welches die folgenden Schritte umfasst:
Bereitstellen eines Temperatursensors, eines Mikroprozessors und einer Steuerschaltung in dem elektrischen Wasserkocher;
Erfassen einer Echtzeittemperatur in dem elektrischen Wasserkocher durch den Sensor;
Berechnen einer Temperaturänderungsgeschwindigkeit gemäß der erfassten Temperatur und Vergleichen der Temperaturänderungsgeschwindigkeit mit einem vorgegebenen Wert durch den Mikroprozessor; und
Senden eines Signals an die Steuerschaltung, falls die Temperaturänderungsgeschwindigkeit größer als der vorgegebene Wert ausfällt, **dadurch gekennzeichnet, dass** der Mikroprozessor eine Beschleunigung einer Änderung der Temperatur berechnet, wenn die demperaturänderungsgeschwindigkeit geringer als der vorgegebene Wert ausfällt, und ein Signal an die Steuerschaltung sendet, wenn die Beschleunigung der Änderung der Temperatur größer als ein vorgegebener Beschleunigungswert ausfällt.

2. Verfahren nach Anspruch 1, **dadurch gekennzeichnet, dass** der Mikroprozessor die Temperaturänderungsgeschwindigkeit eines zu dem gegenwärtigen Zeitraum vorhergehenden Zeitraums abfragt und diese dann abermals mit dem vorgegebenen Wert vergleicht, wenn die Beschleunigung der Änderung der Temperatur geringer als der vorgegebene Beschleunigungswert ausfällt.

3. Verfahren nach Anspruch 2, **dadurch gekennzeichnet, dass** in dem Mikroprozessor eine maximale Aufheizzeit vorgegeben ist, und wobei der Mikroprozessor ein Signal an die Steuerschaltung sendet, falls eine andauernde Aufheizzeit die maximale Aufheizzeit übersteigt.

4. Verfahren nach Anspruch 3, **dadurch gekennzeichnet, dass** in dem Mikroprozessor eine maximale Heiztemperatur vorgegeben ist, und der Mikroprozessor ein Signal an die Steuerschaltung sendet, falls eine gegenwärtige Temperatur die maximale Heiztemperatur übersteigt.

5. Verfahren nach einem der Ansprüche 1 - 4, **dadurch gekennzeichnet, dass** die Steuerschaltung auf Empfang des durch den Mikroprozessor gesendeten Signals die Stromversorgung abstellt.

6. Verfahren nach Anspruch 5, **dadurch gekennzeichnet, dass** der Mikroprozessor die Temperaturänderungsgeschwindigkeit und die Beschleunigung der Änderung der Temperatur für jede der kontinuierlichen Aufheizzeiten speichert.

7. Verfahren nach Anspruch 6, **dadurch gekennzeichnet, dass** der Sensor die Temperatur in dem elektrischen Wasserkocher in Echtzeit erfasst, wenn die Steuerschaltung die Stromversorgung anschaltet, und wobei dann der Mikroprozessor die Temperaturänderungsgeschwindigkeit und die Beschleunigung der Änderung der Temperatur berechnet, und diese mit ihren entsprechenden vorgegebenen Werten vergleicht.

8. Verfahren nach Anspruch 7, **dadurch gekennzeichnet, dass** der Schritt eines Aktivierens eines Daueralarms dann ausgeführt wird, wenn die Steuerschaltung die Heizstromversorgung abschaltet.

9. Verfahren nach Anspruch 8, **dadurch gekennzeichnet, dass** der Mikroprozessor die gespeicherte Temperaturänderungsgeschwindigkeit und Beschleunigung der Änderung der Temperatur löscht, wenn die Steuerschaltung die Heizstromvorsorgung abschaltet.

## Revendications

1. Procédé de commande pour empêcher qu'une bouilloire électrique ne chauffe à sec, comprenant les étapes suivantes :
d'installation d'un capteur de température, d'un microprocesseur et d'un circuit de commande dans la bouilloire électrique ;
de détection, par le capteur, d'une température en temps réel à l'intérieur de la bouilloire électrique ;
de calcul d'une vitesse de variation de température en fonction de la température détectée et de comparaison de la vitesse de variation de température avec une valeur préréglée par le microprocesseur ; et
d'envoi d'un signal au circuit de commande si la vitesse de variation de température est supérieure à la valeur préréglée, **caractérisé en ce que** le microprocesseur calcule une accélération de variation de la température lorsque la vitesse de variation de température est inférieure à la valeur préréglée, et envoie un signal au circuit de commande lorsque l'accélération de variation de la température est supérieure à une valeur d'accélération préréglée.

2. Procédé selon la revendication 1, **caractérisé en ce que** le microprocesseur recherche la vitesse de variation de température d'une période précédant la période en cours et la compare ensuite de nouveau avec la valeur préréglée lorsque l'accélération de variation de la température est inférieure à la valeur d'accélération préréglée.

3. Procédé selon la revendication 2, **caractérisé en ce qu'**une période de chauffe maximale est préréglée dans le microprocesseur, et **en ce que** le microprocesseur envoie un signal au circuit de commande si une période de chauffe continue dépasse la période de chauffe maximale.

4. Procédé selon la revendication 3, **caractérisé en ce qu'**une température de chauffe maximale est préréglée dans le microprocesseur, et **en ce que** le microprocesseur envoie un signal au circuit de commande si une température en cours dépasse la température de chauffe maximale.

5. Procédé selon l'une quelconque des revendications 1 à 4, **caractérisé en ce que** le circuit de commande coupe l'alimentation en courant lors de la réception du signal envoyé par le microprocesseur.

6. Procédé selon la revendication 5, **caractérisé en ce que** le microprocesseur mémorise la vitesse de variation de température et l'accélération de variation de la température pour toutes les périodes de chauffe continue.

7. Procédé selon la revendication 6, **caractérisé en ce que** le capteur commence à détecter, en temps réel, la température à l'intérieur de la bouilloire électrique lorsque le circuit de commande met en circuit l'alimentation en courant de chauffe, et **en ce que**, par la suite, le microprocesseur calcule la vitesse de variation de température et l'accélération de variation de la température, et les compare avec leurs valeurs préréglées respectives.

8. Procédé selon la revendication 7, **caractérisé en ce que** l'étape d'activation d'une alarme continue est assurée lorsque le circuit de commande coupe l'alimentation en courant de chauffe.

9. Procédé selon la revendication 8, **caractérisé en ce que** le microprocesseur efface la vitesse de variation de température et l'accélération de variation de la température mémorisées lorsque le circuit de commande coupe l'alimentation en courant de chauffe.
